Europäisches Patentamt

European Patent Office

Office européen des brevets

(11) Veröffentlichungsnummer : **0 080 065**
**B1**

(12) **EUROPÄISCHE PATENTSCHRIFT**

(45) Veröffentlichungstag der Patentschrift :
05.06.85

(21) Anmeldenummer : 82109744.1

(22) Anmeldetag : 22.10.82

(51) Int. Cl.⁴ : **C 08 F 38/02,** C 08 J 7/16,
**D 06 M 15/00**

(54) Verfahren zur Herstellung von filmförmigen Poly(acetylenen) sowie nach diesem Verfahren hergestellte filmförmige Poly(acetylene).

(30) Priorität : 05.11.81 DE 3143868

(43) Veröffentlichungstag der Anmeldung :
01.06.83 Patentblatt 83/22

(45) Bekanntmachung des Hinweises auf die Patenterteilung : 05.06.85 Patentblatt 85/23

(84) Benannte Vertragsstaaten :
BE DE FR GB NL

(56) Entgegenhaltungen :
EP-A- 0 065 691
DE-A- 2 912 572
CHEMICAL ABSTRACTS, Band 94, Nr. 2, Januar 1981,
Seite 12, Nr. 4403x, Columbus, Ohio, USA

(73) Patentinhaber : BASF Aktiengesellschaft
Carl-Bosch-Strasse 38
D-6700 Ludwigshafen (DE)

(72) Erfinder : Naarmann, Herbert, Dr.
Haardtblick 15
D-6719 Wattenheim (DE)
Erfinder : Naegele, Dieter, Dr.
Obere Jakobstrasse 8
D-6520 Worms (DE)
Erfinder : Penzien, Klaus, Dr.
Bensheimer Ring 18
D-6710 Frankenthal (DE)

## Beschreibung

Die Erfindung betrifft ein Verfahren zur Herstellung von filmförmigen Poly(acetylenen) durch Polymerisation von Acetylen, gegebenenfalls im Gemisch mit Di- und/oder Poly-(alkinen), auf festen Trägermaterialien in Gegenwart von aktiven Übergangsmetallkatalysatoren.

Die nach diesem Verfahren erhaltenen filmförmigen Poly-(acetylene) werden von dem Trägermaterial nicht abgelöst.

Die Herstellung von Poly(acetylen) durch Polymerisation von Acetylen ist bereits bekannt und z. B. in den Literaturstellen : « Annalen » 560, (1948), Seiten 10ff ; « Kogyo Kagaku Zasshi » 65, (1962), Seiten 720ff ; « Journal of Organic Chemistry » 27, (1962), Seiten 1591ff und 3752ff oder DE-OS 29 12 572 beschrieben.

Shirakawa et al. (« Journal of Polymer Science, Polymer Chemical Edition » 12, (1974), Seiten 11ff) haben erstmals gezeigt, daß mit aktiven Zieglerkatalysatoren filmförmiges Poly(acetylen) hergestellt werden kann. Nach den bekannten Methoden werden hochmolekulare Produkte erhalten, die in den üblichen Lösungsmitteln vollkommen unlöslich sind und als amorphe bis hochkristalline Materialien anfallen.

Während in der zitierten vorgängigen Literatur bezüglich Katalyse und Extraktion brauchbare Angaben zu finden sind, ist die von Shirakawa et al. beschriebene Methode der Polymerisation an Glaswandungen zur Herstellung von Poly(acetylen)filmen technisch wenig brauchbar. Zum einen werden bei der Polymerisation in Glasgefäßen Poly(acetylen)filme mit einem Dichtegradient erhalten, zum anderen stört bei der diskontinuierlichen Herstellung auf Glasplatten der schlechte Wärmeübergang. Für ein besonders zu bevorzugendes kontinuierliches Herstellverfahren ist diese Methode gänzlich ungeeignet.

In der älteren europäischen Patentanmeldung Nr. 82 104 043.3 (EP-A-65 691) wird ein Verfahren zur Herstellung von Poly(acetylen)filmen beschrieben, bei dem die Polymerisation des Acetylens auf Trägern aus Metallen mit strukturierter Oberfläche, auf Polyamid- oder Polyesterfolien erfolgt und der erhaltene Polyacetylenfilm nach der Synthese vom Träger abgezogen wird. Es lassen sich so in technisch einfacher Weise diskontinuierlich oder kontinuierlich Poly(acetylen)filme ohne Dichtegradienten herstellen.

Alle nach den bisher bekannten Methoden hergestellten Poly(acetylen)filme lassen jedoch noch hinsichtlich ihrer Handhabbarkeit, mechanischen Stabilität und Verarbeitbarkeit für viele Anwendungszwecke, insbesondere dann, wenn sie mit den üblichen Dotierungsmitteln elektrisch leitfähig gemacht worden sind, zu wünschen übrig.

Der Erfindung lag die Aufgabe zugrunde, ein technisch einfaches Verfahren zur Herstellung von filmförmigem Poly(acetylen) mit hoher Reproduzierbarkeit aufzuzeigen, welches kontinuierlich oder diskontinuierlich betrieben werden kann und bei dem filmförmige Poly(acetylene) mit verbesserter Handhabbarkeit und mechanischer Stabilität erhalten werden, die sich für viele Anwendungszwecke, insbesondere nach Dotierung mit üblichen Dotierungsmitteln als elektrisch leitfähige Produkte auf dem Gebiet der Elektrotechnik, eignen.

Diese Aufgabe wird erfindungsgemäß dadurch gelöst, daß die Polymerisation von Acetylen mittels aktiver Übergangsmetallkatalysatoren auf Fäden, Fasern, Geweben, Gewirken, Fadengelegen, Geflechten oder Netzen als Trägermaterial durchgeführt wird, wobei das Trägermaterial auch nach der Polymerisation mit dem filmförmigen Poly(acetylen) verbunden bleibt.

Gegenstand der Erfindung ist demzufolge ein Verfahren zur Herstellung von filmförmigen Poly(acetylen) durch Polymerisation von Acetylen oder Gemischen von Acetylen mit Di- und/oder Poly(alkinen) auf festen Trägermaterialien in Gegenwart von aktiven Übergangsmetallkatalysatoren, welches dadurch gekennzeichnet ist, daß als Trägermaterialien Fäden, Fasern, Gewebe, Gewirke, Fadengelege, Geflechte oder Netze verwendet werden.

Gemäß einer besonderen Ausgestaltungsform der Erfindung bestehen die als Trägermaterial dienenden Fäden, Fasern, Gewebe, Gewirke, Fadengelege, Geflechte oder Netze aus Metall, Glass oder nativen und/oder synthetischen Fasern und/oder Fäden. Gemäß einer weiteren bevorzugten Ausführungsform wird vor der Polymerisation durch Vergütung und/oder Schlichtung der als Trägermaterial dienenden Fäden, Fasern, Gewebe, Gewirke, Fadengelege, Geflechte oder Netze deren Benetzbarkeit verbessert.

Die nach dem erfindungsgemäßen Verfahren erhaltenen filmförmigen Poly(acetylene) sind fest mit den als Trägermaterial dienenden Fäden, Fasern, Geweben, Gewirken, Fadengelegen, Geflechten oder Netzen verbunden und werden nach der Polymerisation von diesen nicht abgezogen. Die Fäden, Fasern, Gewebe, Gewirke, Fadengelege, Geflechte oder Netze sind somit quasi als Stützgewebe in die erfindungsgemäß hergestellten filmförmigen Poly(acetylene) eingelagert und verbessern dauerhaft deren mechanische Stabilität und Handhabbarkeit. Werden als Trägermaterialien Fäden, Fasern, Gewebe, Gewirke, Fadengelege, Geflechte oder Netze aus zum Beispiel Metallen eingesetzt, eignen sich die erhaltenen filmförmigen Poly(acetylene) hervorragend für den Einsatz in der Elektrotechnik, da die bisher notwendige, sehr störanfällige externe Verbindung der Poly(acetylen)filme mit metallischen Leitern, z. B. mittels Leitlacken, entfällt. Gleiches gilt, wenn als Trägermaterialien Kohlenstoff-Fasern eingesetzt werden. Ebenso können für diesen Zweck Trägermaterialien aus Kunststoff, z. B. Polyethylen, verwendet werden, die als Stromzu- oder ableiter beispielsweise Drähte mit eingelagert enthalten.

Unter filmförmigen Poly(acetylen) werden im Rahmen dieser Erfindung 0,1 bis 1 000, bevorzugt 0,1 bis 500 μm, dünne flächige Gebilde verstanden, die auf der festen Trägeroberfläche haften. Filmförmig ist im Rahmen dieser Erfindung nicht nur auf Filme mit einer geschlossenen Oberfläche beschränkt, sondern umfaßt gleichwohl auch flächenförmige Poly(acetylene) mit z. B. einer erkennbaren Netz oder Gitterstruktur, wie sie beispielsweise bei der Verwendung von sehr grobmaschigen Netzen oder Geflechten als Trägermaterialien erhalten werden können. Die Polymerisation führt direkt zu dem flexiblen filmförmigen Poly(acetylen), das sich in bzw. auf dem Trägergewebe befindet.

Die Polymerisation von Acetylen oder Gemischen von Acetylen mit Di- und/oder Poly(alkinen) ist an sich bekannt und hinreichend in der eingangs zitierten Literatur sowie in der DE-OS 3 100 581 beschrieben. Als Di- und/oder Poly(alkine), welche gegebenenfalls zusammen mit dem Acetylen zu Copolymerisaten umgesetzt werden, kommen hierbei insbesondere in Frage : Butadiin, Hexadiin, Octadiin u. a. Man verwendet zweckmäßig Monomermischungen, die bis zu 50 Mol-% Di- und/oder Poly(alkine), vorzugsweise zwischen 5 und 20 Mol-% Di- und/oder Poly(alkine), enthalten. Unter Acetylen werden im Rahmen dieser Erfindung neben dem unsubstituierten Acetylen selbst auch die substituierten Acetylene verstanden, in denen ein oder beide Wasserstoffatome durch Halogenatome, niedere Alkyl-Reste, vorzugsweise mit 1 bis 6 C-Atomen und insbesondere mit 1 bis 4 C-Atomen oder Phenyl-Reste ersetzt sind. Als Übergangsmetallkatalysatoren kommen insbesondere die in der DE-OS 29 12 572 angeführten Verbindungen in Betracht sowie Luttinger Systeme aus $NaBH_4$/Co-Salz. Besonders geeignet ist ein Zieglerkontakt aus $Al(C_2H_5)_3$ und $Ti(OC_4H_9)_4$ oder $Zr(OC_4H_9)_4$. Das Mischungsverhältnis aus Aluminiumtrialkyl und Titan- bzw. Zirkontetraoxialkyl liegt zwischen 0,5 : 1 und 1 : 0,5, vorzugsweise um 1 : 1, jeweils bezogen auf Gewichtsteile.

Erfindungsgemäß werden als Trägermaterialien für die Polymerisation Fäden, Fasern, Gewebe, Gewirke, Fadengelege, Geflechte oder Netze eingesetzt. Die Fäden und/oder Fasern können dabei isoliert nebeneinander vorliegen ; vorzugsweise sind sie aber zu flächenförmigen Gebilden lose oder fest miteinander verbunden. Unter Geweben, Gewirken, Fadengelegen, Geflechten oder Netzen sollen ganz allgemein flächenförmige Gebilde verstanden werden, die aus einzelnen Fäden und/oder Fasern bestehen. Die fadenfreien Flächen der Gewebe, Gewirke, Fadengelege, Geflechte oder Netze, d. h. der nicht durch Fäden oder Fasern abgedeckte Anteil der Gesamtfläche dieser Gebilde, sowie die Größe der Öffnungen in den Geweben, Gewirken, Fadengelegen, Geflechten oder Netzen sind für das erfindungsgemäße Verfahren nicht von Bedeutung und können daher in weiten Grenzen variiert werden, solang und sofern filmförmige Poly(acetylene) erhalten werden. Zur Herstellung von möglichst gleichmäßigen Filmen werden fadenfreie Fläche und Größe der Öffnungen in den Trägermaterialien im allgemeinen gering gehalten. Die Dicke der Fäden, Fasern, Gewebe, Gewirke, Fadengelege, Geflechte oder Netze wird durch die Dicke der gewünschten filmförmigen Poly(acetylene) bestimmt und kann in den hierfür angegebenen Bereichen variieren. Im allgemeinen wird die Dicke der Fäden, Fasern, Gewebe, Gewirke, Fadengelege, Geflechte oder Netze etwas geringer sein als die Dicke der filmförmigen Poly(acetylene).

Die erfindungsgemäß als Trägermaterialien einzusetzenden Fäden, Fasern, Gewebe, Gewirke, Fadengelege, Geflechte oder Netze können aus den verschiedensten Materialien bestehen, wie beispielsweise aus Metallen, Glas, nativen und/oder synthetischen Fasern und/oder Fäden. Als Metalle sind u. a. Edelstähle, Messing, Bronzen, Edelmetalle wie Gold, Silber oder Platin, und Aluminium geeignet. Als native und/oder synthetische Fasern und/oder Fäden kommen beispielsweise solche aus Cellulose, Jute, Hanf, Baumwolle, Seide, Kohlenstoff, Polyamiden, Polyestern, Polyethylen, Polypropylen, Polyvinylchlorid und Polyacrylnitril in Betracht. Wesentlich ist, daß die als Trägermaterialien eingesetzten Produkte eine gute Haftung zu den Poly(acetylen)filmen haben.

Die Träger geben bisweilen nur dann gute Haftung mit Poly(acetylen)filmen, wenn sie eine geeignete Oberflächenbehandlung zur Erzielung einer verbesserten Benetzbarkeit erfahren haben. Sandstrahlen oder Schmirgeln sind beispielsweise geeignete Oberflächenbehandlungen für Metalle. Kunststoff-Fasern geben nur dann Haftung mit Poly(acetylen)filmen, wenn das Polymer stark polare Gruppen aufweist. So zeigen Polyamid-Träger mit Poly(acetylen)beschichtungen eine derart gute Haftung, daß die zerstörungsfreie Trennung der zwei Schichten unmöglich wird. Auch Polyesterfasern sind für das erfindungsgemäße Verfahren geeignet. Andere Kunststoffe, beispielsweise solche aus Polyethylen, Polypropylen und Polyvinylchlorid, sind vorher zu vergüten, so daß sie als Trägermaterialien für die erfindungsgemäße Herstellung der Poly(acetylen)filme geeignet sind. Geeignete Oberflächenbehandlungen für Kunststoff-Fasern sind beispielsweise die Behandlung mit geeigneten Schlichten, Bindemitteln oder Appreturen.

Zur Herstellung der Poly(acetylen)folien geht man üblicherweise so vor, daß man zunächst das erfindungsgemäße Trägermaterial mit dem Polymerisationskatalysator tränkt und dann mit Acetylen begast. Je nach Art des eingesetzten Katalysators, auch bei zu niedriger Katalysatorkonzentration, können sich gelartige Beschichtungen ausbilden, die man durch Pressen auf dem Träger verfestigen kann. Im nächsten Verfahrensschritt befreit man den Poly(acetylen)film vom eingeschlossenen Polymerisationskatalysator durch Extrahieren mit Lösungsmitteln. Hierzu verwendet man bevorzugt solche Lösungsmittel, die den Katalysator homogen auflösen, den Träger nicht verändern sowie vom extrahierten Katalysator destillativ leicht zu trennen sind. Geeignete Extraktionsmittel sind je nach dem verwendeten Trägermaterial z. B. aromatische oder aliphatische Kohlenwasserstoffe, Ether, Ester oder Ketone. Anschließend trocknet man das erhaltene filmförmige Poly(acetylen).

Die erfindungsgemäß hergestellten filmförmigen Poly(acetylene) können durch Dotierung mit üblichen Dotierungsmitteln in elektrisch hochleitfähige Systeme überführt werden und werden dann zweckmäßig in der Elektrotechnik, insbesondere als Elektrodenmaterial, verwendet.

Die folgenden Beispiele dienen der näheren Erläuterung der Erfindung.

Beispiel 1

Ein Gewebe aus Polyamidfasern wurde mit aktivem Ziegler-Kontakt aus $Al(C_2H_5)_3$ und $Ti(OC_4H_9)_4$ (Molverhältnis etwa 1 : 1) beschichtet, mit Acetylen bei − 20 °C begast, nach Beendigung der Polymerisation mit Toluol extrahiert und in Stickstoffstrom bei + 50 °C getrocknet. Die Poly(acetylen)-schicht zeigte auf dem Polyamid sehr gute Haftung, sie konnte ohne Zerstörung nicht abgelöst werden.

Beispiel 2

Auf ein Gewebe aus Polyesterfasern wurde gemäß Beispiel 1 Poly(acetylen) polymerisiert, extrahiert und getrocknet. Es bildete sich eine homogene Beschichtung im Gewebe aus.

Beispiele 3 bis 7

Edelstahl-, Gold-, Aluminium-, Messing- und Bronzegewebe mit Maschenweiten zwischen 0,01 bis 3 mm wurden gemäß Beispiel 1 mit Polyacetylen beschichtet und untersucht. Homogenität und Häftung der extrahierten und getrockneten Beschichtung waren gut, die Beschichtungen ließen sich vom Gewebe mechanisch nicht ablösen.

Beispiele 8 bis 12

Edelstahl-, Gold-, Aluminium-, Messing- und Bronzegewebe mit geschmirgelten Oberflächen wurden gemäß Beispiel 1 mit Polyacetylen beschichtet und untersucht. Homogenität und Haftung waren gleich hervorragend wie in den Beispielen 3 bis 7.

Beispiele 13 bis 19

Ein Glasgewebe wurde gemäß Beispiel 1 mit Polyacetylen beschichtet. Homogenität und Haftung der extrahierten und getrockneten Beschichtung waren gut, die Beschichtung ließ sich vom Träger nicht mehr mechanisch ablösen. Analog wurden Gewebe aus (14) Cellulosefasern (15), Hanf (16), Seide (17), Polyacrylnitril (18), Kohlenstoff-Fasern (19), Polyphenolfasern behandelt. In allen Fällen entstanden Gewebe mit mechanisch nicht ablösbarer Beschichtung.

Patentansprüche

1. Verfahren zur Herstellung von filmförmigen Poly(acetylenen) durch Polymerisation von Acetylenen, gegebenenfalls im Gemisch mit Di- und/oder Poly(alkinen), auf festen Trägermaterialien in Gegenwart von aktiven Übergangsmetallkatalysatoren, dadurch gekennzeichnet, daß als Trägermaterialien Fäden, Fasern, Gewebe, Gewirke, Fadengelege, Geflechte oder Netze verwendet werden.

2. Verfahren nach Anspruch 1, dadurch gekennzeichnet, daß die Trägermaterialien aus Metall bestehen.

3. Verfahren nach Anspruch 1, dadurch gekennzeichnet, daß die Trägermaterialien aus Glas oder nativen und/oder synthetischen Fasern und/oder Fäden gebildet werden.

4. Verfahren nach einem der Ansprüche 1 bis 3, dadurch gekennzeichnet, daß als Trägermaterialien oberflächlich vorbehandelte Fäden, Fasern, Gewebe, Gewirke, Fadengelege, Geflechte oder Netze eingesetzt werden.

5. Filmförmige Poly(acetylene) einer Dicke von etwa 0,1 bis 1 000 μm enthaltend Fäden, Fasern, Gewebe, Gewirke, Fadengelege, Geflechte oder Netze als Träger- und Stützmaterialien in fester Verbindung mit dem Poly(acetylen).

6. Filmförmige Poly(acetylene) nach Anspruch 5, dadurch gekennzeichnet, daß die Träger- und Stützmaterialien aus Metall bestehen.

7. Filmförmige Poly(acetylene) nach Anspruch 5, dadurch gekennzeichnet, daß die Träger- und Stützmaterialien aus Glas oder nativen und/oder synthetischen Fasern und/oder Fäden gebildet werden.

Claims

1. A process for the production of a poly(acetylene) film by polymerization of acetylene, or a mixture of acetylene with a di- and/or poly(alkyne), on a firm base in the presence of an active transition metal catalyst, wherein filaments, fibers, woven or knitted fabrics, nonwovens, laid webs, interlaced structures of nets are used as the base.

2. A process as claimed in claim 1, wherein the base consists of metal.

3. A process as claimed in claim 1, wherein the base is composed of glass or naturel and/or synthetic fibers and/or filaments.

4. A process as claimed in any of claims 1 to 3, wherein filaments, fibers, woven or knitted fabrics, nonwovens, laid webs, interlaced structures or nets, the surfaces of which have been pretreated, are used as the base.

5. A poly(acetylene) film which is about 0.1-1,000 μm thick and contains, as the reinforcing base, filaments, fibers, woven or knitted fabrics, nonwovens, laid webs, interlaced structures or nets which are firmly bonded to the poly(acetylene).

6. A poly(acetylene) film as claimed in claim 5, wherein the reinforcing base consists of metal.

7. A poly(acetylene) film as claimed in claim 5, wherein the reinforcing base consists of glass or natural and/or synthetic fibers and/or filaments.

## Revendications

1. Procédé de préparation de poly-acétylènes pelliculaires par polymérisation d'acétylènes, éventuellement en mélange avec des di- et (ou) des poly-alcynes, en présence de catalyseurs aux métaux de transition actifs, sur des matériaux supports solides, caractérisé en ce que le matériau support est choisi parmi les fils, les fibres, les tissus tissés ou tricotés, les mats de fils, les treillis et les filets.

2. Procédé suivant la revendication 1, caractérisé en ce que le matériau support est en métal.

3. Procédé suivant la revendication 1, caractérisé en ce que le matériau support est en verre ou formé de fibres et (ou) fils naturels et (ou) synthétiques.

4. Procédé suivant l'une des revendications 1 à 3, caractérisé en ce que le matériau support est constitué de fils, de fibres, de tissus tissés ou tricotés, de mats de fils, de treillis ou de filets ayant subi un traitement superficiel préliminaire.

5. Poly-acétylènes pelliculaires d'une épaisseur d'environ 0,1 à 1 000 μm, contenant des fils, fibres, tissus tissés ou tricotés, des mats de fils, des treillis ou des filets solidement liés au poly-acétylène en tant que matériau support et de renforcement.

6. Poly-acétylènes pelliculaires suivant la revendication 5, caractérisés en ce que le matériau support et de renforcement est en métal.

7. Poly-acétylènes pelliculaires suivant la revendication 5, caractérisés en ce que le matériau support et de renforcement est formé de verre ou de fibres et (ou) fils naturels et (ou) synthétiques. ·